# EUROPEAN PATENT SPECIFICATION

(11) **EP 1 631 763 B1**
(45) Date of publication and mention of the grant of the patent: **13.12.2006**
(21) Application number: 04767138.3
(22) Date of filing: 26.08.2004
(51) Int. Cl.: F16L 23/028

(54) **FLANGE JOINT WITH AT LEAST ONE FLANGE BEING MOUNTED IN A ROTATION ALLOWING MANNER**
FLANSCHVERBINDUNG, BEI DER MINDESTENS EIN FLANSCH AUF DREHBARE WEISE ANGEBRACHT IST
JOINT A BRIDES COMPRENANT AU MOINS UNE BRIDE MONTEE DE MANIERE A PERMETTRE LA ROTATION

(30) Priority: 11.02.2004 KR 2004008934
(43) Date of publication of application: 08.03.2006
(73) Proprietor: GS-HYDRO OY, 13110 Hämeenlinna (FI)
(72) Inventor: ERIKSSON, Risto, FI-37600 Valkeakoski (FI)
(74) Representative: LEITZINGER OY
(86) International application number: PCT/FI2004/050118
(87) International publication number: WO 2005/078329

(56) References cited:
- DE-C- 449 250
- GB-A- 1 424 595
- US-A- 4 448 448
- US-A- 4 488 743

## Description

The present invention relates to a flange joint, comprising a pair of tubular pieces to be joined, a damping flange mounted on each of the pieces to be joined, retaining means cooperating with the clamping flanges for joining said pieces together, at least one of the damping flanges being mounted in a rotation allowing manner on the respective piece to be joined by effecting the mounting with a locking ring fitted in a locking groove formed in the piece to be joined and in a complementary groove formed in the clamping flange. Flange joints like this are used especially for joining pipes, whereby each piece to be joined is provided with a clamping flange.

Clamping flanges used generally in the prior art have been fixedly mounted on the ends of pipes to be joined, e.g. by welding. The resulting material costs are quite high and, due to the unturnability of the flanges, it is often difficult to bring opposite to each other the tightening holes of the flanges present at the ends of pipes to be joined, e.g. during reinstallation.

This has led to the development of clamping flanges which are rotatable around a pipe to be joined, as disclosed e.g. in US-patent 3,966,234.

One problem with prior known flange joints allowing a turning motion of the clamping flange is a relatively deep shape of the locking groove in a piece to be joined in order to retain the locking ring in the groove and this design results in a relatively high notch sensitivity for a piece to be joined, which has an adverse effect on fatigue strength. In addition, the locking ring will be exposed to quite high shearing forces in the process of tightening the damping flanges present at the ends of pieces to be joined towards each other, whereby, in practice, the locking ring cannot be reused in case the joint must be uncoupled and then reinstalled.

Hence, one objective of the present invention is to provide an improved flange joint assembly, wherein the fatigue strength of a piece to be joined and provided with a joint groove shall be improved and, in addition, the shearing strength of a locking ring will be improved.

In order to accomplish this objective, a flange joint of the invention is characterized in that the piece to be jointed has its locking groove shaped to be relatively shallow, that the damping flange has its complementary groove shaped to extend in the damping flange's axial direction up to a front face of the clamping flange, the complementary groove expanding towards a junction between the pieces to be joined, and that the locking ring is provided with a support portion which fits in the expanded portion of the damping flange's groove, thus bearing against an external surface of the piece to be joined.

The invention will now be described in more detail with reference to the accompanying drawings, in which:
- Fig. 1: shows a flange joint of the prior art,
- Fig. 2: shows a flange joint of the present invention,
- Fig. 3: shows in a perspective view a locking ring for use in a flange joint of the invention, and
- Fig. 4: shows the locking ring of fig. 3 in a layout view.

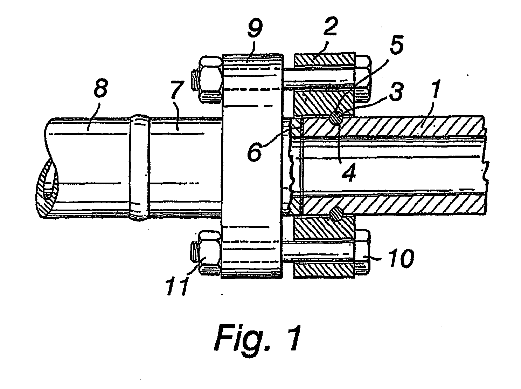

The prior art flange joint of fig. 1, described in more detail in US-patent 3,966,234, comprises a pipe piece 1 and a welding nipple 7 to be joined together, said welding nipple 7 being welded on another pipe 8. A clamping flange 2 is arranged around the pipe 1 and a second clamping flange 9 around the nipple 7. The flanges 2 and 9 are tightened together with suitable means, e.g. a nut/screw combination 10, 11. At least one of the damping flanges 2 and 9, in fig. 1 flange 2, is arranged around the piece 1 to be joined in such a way that the pipe 1 is formed with a locking groove 4 and the clamping flange 2 is formed with a complementary groove 5. When arranged opposite to each other, these grooves form a substantially closed space which is provided with a locking ring 3. The locking ring 3 extends in radial direction from the groove 4 to the complementary groove 5 of the flange 2. The locking ring 3 is preferably of metal, but can also be made of other suitable material. The damping flange 9 around the welding nipple 7 can be of any suitable type, such as e.g. welded securely to the welding nipple 7. Reference numeral 6 represents a packing to be fitted between the ends of pieces to be joined.

The prior art flange joint according to fig. 1 functions quite well as such, but one problem therein is a reduced fatigue strength resulting from a relatively deep locking groove 4, which may lead to cracking and premature fracturing of the pipe. In addition, the locking ring 3 is exposed to relatively high shearing forces in the process of tightening the clamping flanges with the retaining means 10, 11, which is why the locking ring 3 must be normally replaced with a new locking ring as the joint is uncoupled and reinstalled.

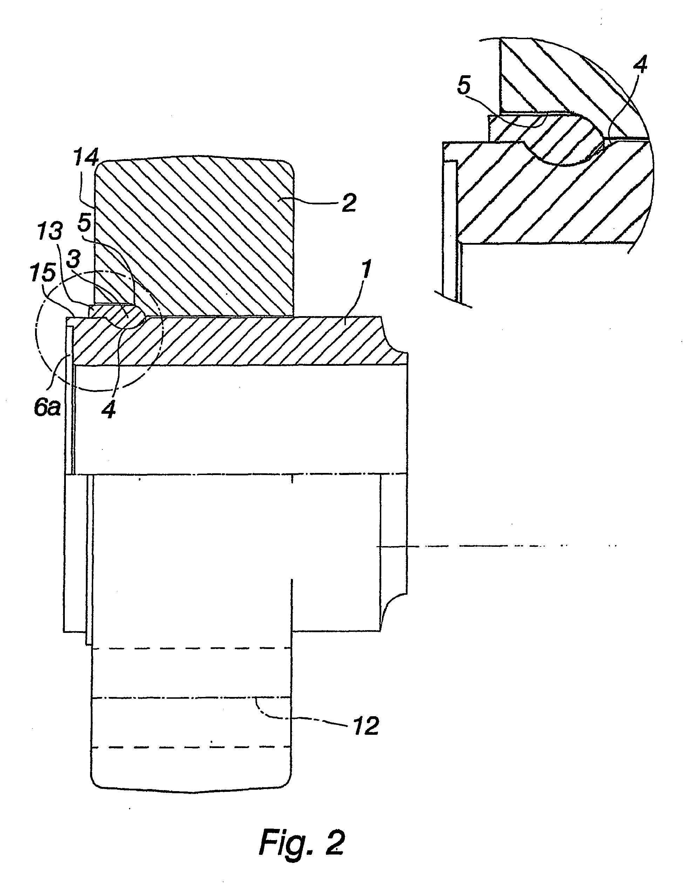

Fig. 2 illustrates one embodiment for a flange joint of the invention, wherein the locking groove 4 is made relatively shallow by shaping its bottom in the form of e.g. a segment of a substantially oval curve or in the form of e.g. a segment of a large-radius circular arc, whereby its notch sensitivity is reduced as compared with prior art locking grooves. The clamping flange 2 in turn has its complementary groove 5 shaped at its back edge in the form matching substantially the locking groove 4 and extended at its front edge to extend up to a front face 14 of the damping flange 2. This extended portion of the complementary groove 5 has a bottom which is substantially linear in cross-section. The inventive flange joint comprises further a newly designed locking ring 3 provided with a support portion 13, which is external of the portion to be fitted in the locking groove 4 and which fits in the expanded portion of the clamping flange's 2 groove 5, thus bearing against an external surface 15 of the piece 1. The locking ring 3, along with its support portion 13, is preferably of metal but can be made of some other suitable material as well. The support portion 13 blocks the attempt of a locking ring to push itself out of the locking groove 4 in the process of tightening the damping flange 2 towards the damping flange presently around the other piece to be joined. In addition, a shallow design of the locking groove and a matching design of the locking ring reduce the shearing forces applied to the locking ring in the process of tightening the flanges, whereby the locking ring does not easily sustain such deformations that would preclude its reuse. Reference numeral 6a represents a packing groove formed in the front face of the piece 1 to be joined for a packing (not shown) fitted between the pieces to be joined. One appropriate packing solution is disclosed in German utility model publication G 94 07 090.3 applied for by the applicant of the present application.

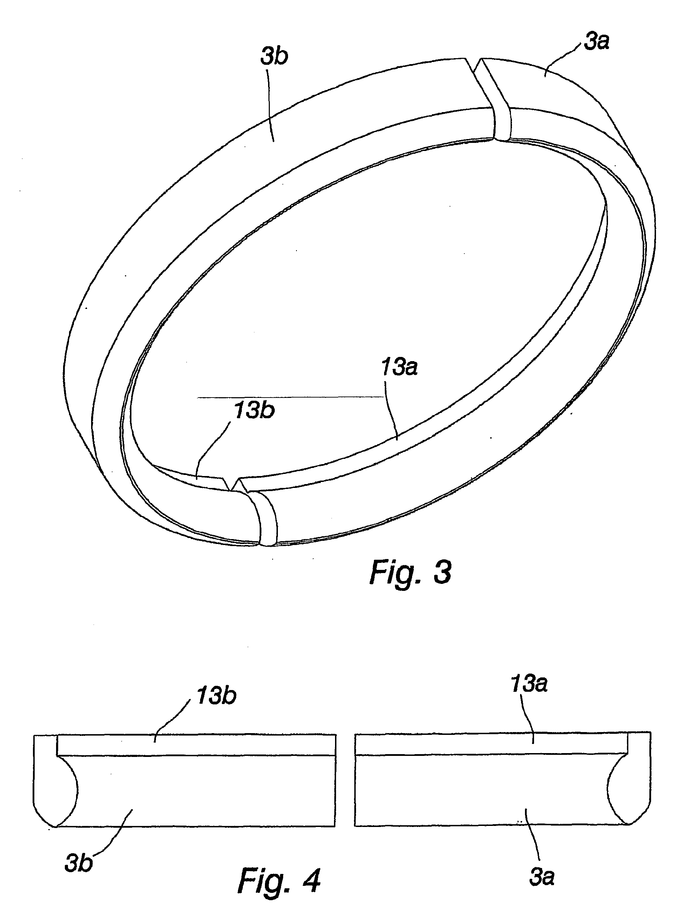

According to figs. 3 and 4, the locking ring 3 is preferably designed as a split structure, including two ring sections 3a and 3b and respectively support portions 13a and 13b associated therewith. The locking ring 3 can also be comprised of more than two sections. The locking ring sections 3a and 3b are preferably mounted as separate elements on the locking member 4, but can also be coupled together by means of a flexible joint, e.g. by vulcanizing a rubber-made joining piece between the butting ends of the locking ring sections 3a and 3b, which allows slipping of the ring on the external surface of the piece 1 to be joined and pushing it therealong until the locking ring seats itself in the locking groove 4 as the flexible joining pieces pull the sections 3a and 3b against the bottom of the groove 4.

## Claims

1. A flange joint, comprising a pair of tubular pieces (1, 7) to be joined, a clamping flange (2, 9) mounted on each of the pieces (1, 7) to be joined, retaining means (10, 11) cooperating with the clamping flanges (2, 9) for joining said pieces (2, 7) together, at least one (2) of the clamping flanges being mounted in a rotation allowing manner on the respective piece (1) to be joined by effecting the mounting with a locking ring (3) fitted In a locking groove (4) formed in the piece (1) to be joined and in a complementary groove (5) formed in the clamping flange (2), **characterized in that** the piece (1) to be jointed has its locking groove (4) shaped to be relatively shallow, that the clamping flange (2) has its complementary groove (5) shaped to extend in the clamping flange's axial direction up to a front face (14) of the clamping flange, the complementary groove (5) expanding towards a junction between the pieces to be joined, and that the locking ring (3) is provided with a support portion (13) which fits in the expanded portion of the damping flange's (2) groove (5), thus bearing against an external surface (15) of the piece (1) to be joined.

2. A flange joint as set forth in claim 1, **characterized in that** the locking groove (4) has a cross-sectional shape which forms a segment of a substantially oval curve.

3. A flange joint as set forth in claim 1, **characterized in that** the locking groove (4) has a cross-sectional shape which forms a segment of a large-radius circular arc.

4. A flange joint as set forth in any of the preceding claims, **characterized in that** the locking ring's (3) support portion (13) is substantially rectangular in cross-section.

5. A flange joint as set forth in any of the preceding claims, **characterized in that** the locking ring (3) is made up of two or more sections (3a, 3b).

6. A flange joint as set forth in claim 5, **characterized in that** the locking ring's (3) sections (3a, 3b) are present as separate elements in the locking groove (4).

7. A flange joint as set forth in claim 5, **characterized in that** the locking ring's (3) sections (3a, 3b) are coupled to each other with a flexible joint to be fitted in the locking groove (4) as a one-piece element.

## Patentansprüche

1. Eine Flanschverbindung, die ein Paar von röhrenförmigen Stücken (1, 7), die verbunden werden sollen, einen Klemmflansch (2, 9), der an jedem der Stücke (1, 7), die verbunden werden sollen, befestigt ist, eine Halteeinrichtung (10, 11), die mit den Klemmflanschen (2, 9) zum Verbinden der Stücke (2, 7) miteinander zusammenwirkt, wobei zumindest einer (2) der Klemmflansche auf eine Drehbewegung ermöglichende Weise an dem jeweiligen Stück (1), das verbunden werden soll, durch ein Bewirken der Befestigung mit einem Verriegelungsring (3) befestigt ist, der in eine Verriegelungsrille (4), die in dem Stück (1) gebildet ist, das verbunden werden soll, und in eine komplementäre Rille (5), die in dem Klemmflansch (2) gebildet ist, gepasst ist, **dadurch gekennzeichnet, dass** bei dem Stück (1), das verbunden werden soll, die Verriegelungsrille (4) derselben geformt ist, um relativ flach zu sein, dass bei dem Klemmflansch (2) die komplementäre Rille (5) desselben geformt ist, um sich in die axiale Richtung des Klemmflanschs bis zu einer vorderen Fläche (14) des Klemmflanschs zu erstrecken, wobei sich die komplementäre Rille (5) zu einer Verbindungsstelle zwischen den Stücken, die verbunden werden sollen, hin erstreckt, und dass der Verriegelungsring (3) mit einem Trageabschnitt (13) versehen ist, der in den erweiterten Abschnitt der Rille (5) des Klemmflanschs (2) passt, wobei derselbe so gegen eine äußere Oberfläche (15) des Stücks (1) drückt, das verbunden werden soll.

2. Eine Flanschverbindung gemäß Anspruch 1, **dadurch gekennzeichnet, dass** die Verriegelungsrille (4) eine Querschnittsform aufweist, die ein Segment einer im Wesentlichen ovalen Krümmung bildet.

3. Eine Flanschverbindung gemäß Anspruch 1, **dadurch gekennzeichnet, dass** die Verriegelungsrille (4) eine Querschnittsform aufweist, die ein Segment eines kreisförmigen Bogens mit großem Radius bildet.

4. Eine Flanschverbindung gemäß einem der vorhergehenden Ansprüche, **dadurch gekennzeichnet, dass** der Trageabschnitt (13) des Verriegelungsrings (3) im Querschnitt im Wesentlichen rechteckig ist.

5. Eine Flanschverbindung gemäß einem der vorhergehenden Ansprüche, **dadurch gekennzeichnet, dass** der Verriegelungsring (3) aus zwei oder mehr Abschnitten (3a, 3b) gebildet ist.

6. Eine Flanschverbindung gemäß Anspruch 5, **dadurch gekennzeichnet, dass** die Abschnitte (3a, 3b) des Verriegelungsrings (3) als getrennte Elemente in der Verriegelungsrille (4) vorhanden sind.

7. Eine Flanschverbindung gemäß Anspruch 5, **dadurch gekennzeichnet, dass** die Abschnitte (3a, 3b) des Verriegelungsrings (3) mit einer flexiblen Verbindung, die als ein einstückiges Element in die Verriegelungsrille (4) gepasst werden soll, miteinander gekoppelt sind.

## Revendications

1. Joint à bride comprenant une paire de pièces tubulaires (1, 7) à relier, une bride de serrage (2, 9) montée sur chacune des pièces (1, 7) à relier, un moyen de retenue (10, 11) qui coopère avec les brides de serrage (2, 9) pour assembler lesdites pièces (2, 7) l'une à l'autre, au moins l'une (2) des brides de serrage étant montée d'une manière qui permet la rotation sur la pièce respective (1) à relier en effectuant le montage avec une bague de blocage (3) logée dans une gorge de blocage (4) formée dans la pièce (1) à relier et dans une gorge complémentaire (5) formée dans la bride de serrage (2), **caractérisé en ce que** la pièce (1) à relier a une gorge de blocage (4) relativement peu profonde, **en ce que** la gorge complémentaire (5) de la bride de serrage (2) a une forme conçue pour qu'elle s'étende dans la direction axiale de la bride de serrage vers le haut jusqu'à une face avant (14) de la bride de serrage, la gorge complémentaire (5) s'élargissant vers une jonction entre les pièces à relier, et **en ce que** la bague de blocage (3) est munie d'une partie de support (13) qui se loge dans la partie élargie de la gorge (5) de la bride de serrage (2), prenant ainsi appui sur une surface extérieure (15) de la pièce (1) à relier.

2. Joint à bride selon la revendication 1, **caractérisé en ce que** la gorge de blocage (4) a une forme de section transversale qui forme un segment d'une courbe substantiellement ovale.

3. Joint à bride selon la revendication 1, **caractérisé en ce que** la gorge de blocage (4) a une forme de section transversale qui forme un segment d'un arc circulaire à grand rayon.

4. Joint à bride selon l'une quelconque des revendications précédentes, **caractérisé en ce que** la partie de support (13) de la bague de blocage (3) est de section substantiellement rectangulaire.

5. Joint à bride selon l'une quelconque des revendications précédentes, **caractérisé en ce que** la bague de blocage (3) est constituée de deux sections (3a, 3b) ou davantage.

6. Joint à bride selon la revendication 5, **caractérisé en ce que** les sections (3a, 3b) de la bague de blocage (3) sont présentes en tant qu'éléments distincts dans la gorge de blocage (4).

7. Joint à bride selon la revendication 5, **caractérisé en ce que** les sections (3a, 3b) de la bague de blocage (3) sont accouplées les unes aux autres avec un joint flexible à loger dans la gorge de blocage (4) en tant qu'élément monobloc.
